# EUROPEAN PATENT APPLICATION

(11) **EP 4 572 041 A1**
(43) Date of publication of application: **18.06.2025**
(21) Application number: 24215290.8
(22) Date of filing: 26.11.2024
(51) Int. Cl.: H02B 1/20, H02G 5/00

(54) **BUS SECTION SPLICE CONNECTION ASSEMBLIES**

(30) Priority: 13.12.2023 US 202318538215
(71) Applicant: Schneider Electric USA, Inc., Andover, MA 01810 (US)
(72) Inventor: ROBERTSON, Denise, Andover, MA, 01810 (US); DOZIER, Steven Wayne, Andover, MA, 01810 (US); SCARBOROUGH, William, Andover, MA, 01810 (US)
(74) Representative: Manitz Finsterwald Patent- und Rechtsanwaltspartnerschaft mbB

(57) **Abstract**

A splice joint assembly for joining bus bar structure ends to allow a splice connection at each bus bar structure of a plurality of bus bar structures can include a carriage bolt configured to pass through an opening in the plurality of bus bar structures to fix a position of the plurality of bus bar structures relative to each other and to align the plurality of bus bar structures. The carriage bolt can be electrically insulated or made of an electrically insulating material, for example. The splice joint assembly can include a spacer structure disposed between each bus bar structure and around the carriage bolt, the spacer structure configured to electrically isolate each bus bar structure from adjacent bus bar structures. The spacer structure can define an axial gap distance between bus bar structures. The spacer structure can define an elongated over-surface path to elongate an over-surface distance to maintain electrical isolation of adjacent bus bar structures.

## Description

### FIELD

This disclosure relates to bus section splice connection assemblies.

### BACKGROUND

Typically splice connections are only front accessible and access to them very restricted because they are not located at the section front. Splice hardware is not totally captive, so hardware can be accidentally dropped into each section. Some splices, such as a right hand side splice, are very difficult to access from the front of certain assemblies. Certain traditional systems include four physically separated phase splice connections that are typically require eight torque connections total for a four phase system (A phase left and right, B phase left and right, C phase left and right, and a neutral left and right).

Such conventional methods and systems have generally been considered satisfactory for their intended purpose. However, there is still a need in the art for improvements. The present disclosure provides a solution for this need.

### SUMMARY

A splice joint assembly for joining bus bar structure ends to allow a splice connection at each bus bar structure of a plurality of bus bar structures can include a carriage bolt configured to pass through an opening in the plurality of bus bar structures to fix a position of the plurality of bus bar structures relative to each other and to align the plurality of bus bar structures. The carriage bolt can be electrically insulated or made of an electrically insulating material, for example. The splice joint assembly can include a spacer structure disposed between each bus bar structure and around the carriage bolt, the spacer structure configured to electrically isolate each bus bar structure from adjacent bus bar structures. The spacer structure can define an axial gap distance between bus bar structures. The spacer structure can define an elongated over-surface path to elongate an over-surface distance to maintain electrical isolation of adjacent bus bar structures.

In certain embodiments, the splice joint assembly can include the bus bar structures. In certain embodiments, the bus bar structures each include bus bar pairs configured to receive complimentary bus bar pairs. Certain embodiments of the splice joint assembly can include the complimentary bus bar pairs, wherein the complimentary bus bar pairs include a rotatable portion configured to rotate into captive engagement with the bus bar structures.

In certain embodiments, the spacer structure can include a plurality of flanged spacers configured to nest together to isolate the bus bar structures. In certain embodiments, the plurality of flanged spacers can include alternating first spacers and second spacers. In certain embodiments, each of the first spacers can include a first neck portion extending over the carriage bolt and having an outer dimension configured to fit within the opening of the plurality of bus bar structures, and a first flange portion extending dimensionally outward relative to the first neck portion. In certain embodiments, each of the second spacers can include a second neck portion extending over the carriage bolt and having an outer dimension configured to fit within the opening of the plurality of bus bar structures, and a second flange portion extending dimensionally outward relative to the second neck portion. The second neck portion can be configured to nest with the first neck portion, and the second flange portion can be configured to nest with the first flange portion.

In certain embodiments, the first flange portion and the second flange portion can define one or more channels configured to increase surface area and/or an over-surface distance between bus bar structures. In certain embodiments, the alternating first spacers and second spacers form a continuous cover over the carriage bolt and an interface for one or more complimentary captive bus bar hook structures.

In certain embodiments, the splice joint assembly can include an anti-rotation retainer assembly configured to retain the carriage bolt in a rotational position relative to the bus bar structures, and a nut configured to thread to the carriage bolt to axially retain the carriage bolt, the bus bar structures, and the spacer assembly. In certain embodiments, the anti-rotation retainer can include a housing structure configured to engage with an end bus bar structure of the plurality of bus bar structures to prevent rotation of the housing structure. The housing structure can be configured to receive a flat of the carriage bolt to rotationally lock the carriage bolt to the housing structure. In certain embodiments, the housing structure can include a lip configured to contact the end bus bar structure and to engage the end bus bar structure with the lip. In certain embodiments, the housing structure can include a plate detent defined by one or more walls extending axially.

In certain embodiments, the housing structure can include a plate configured to insert into the plate detent such that the plate cannot rotate relative to the housing structure. The plate can include a carriage bolt hole shaped to interface with the flat on the carriage bolt to prevent the carriage bolt from rotating relative to the plate. The anti-rotation retainer can include a captive member configured to trap the carriage bolt and plate to the housing structure. The captive member can be fastened to the housing.

In certain embodiments, the carriage bolt can be metallic and include an insulating sheath disposed thereon. The carriage bolt can be made of any other suitable material (e.g., a suitably strong non-conductive material).

In accordance with at least one aspect of this disclosure, a bus bar splice assembly can include a first plurality of bus bar structures of a first section joined together at a first joint while being electrically isolated from each other, a second plurality of bus bar structures of a second section joined together at a second joint while being electrically isolated from each other, and a rotating captive engagement assembly rotatably and electrically connected to the second plurality of bus bar structures at a rotation joint and configured to engage the first plurality of bus bar structures at the first joint in an engaged position to electrically connect the first plurality of bus bar structures to the second plurality of bus bar structures to splice the first section and the second section. At least one of the first joint, the second joint, or the rotation joint can be a splice joint assembly as disclosed herein. In certain embodiments, the captive engagement assembly can include a hook shape.

In accordance with at least one aspect of this disclosure, an electrical assembly can include a first section (e.g., having a first plurality of bus bar structures), a second section (having a second plurality of bus bar structures), and at least one splice joint assembly, e.g., as disclosed herein, disposed between the first section and the second section to splice the first section and the second section together in electrical communication. The assembly can include any other suitable components and/or structures, and any suitable number of splice joint assemblies.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a perspective view of an embodiment of a bus bar splice assembly in accordance with this disclosure, shown having a plurality of splice joint assemblies in accordance with this disclosure, shown in a disengaged position;
Fig. 1B is a perspective view of the embodiment of Fig. 1A, shown in an engaged position;
Fig. 2A is a plan (e.g., top) view of an embodiment of the embodiment of Fig. 1B, shown as part of two sections of an electrical system;
Fig. 2B is a detail view of Fig. 2A;
Fig. 2C is an elevation (e.g., front) view of the embodiment of Fig. 2A;
Fig. 3 is a perspective exploded of a splice joint assembly of Fig. 1A;
Fig. 4A is a perspective view of a portion of a spacer structure in accordance with this disclosure of the splice joint assembly of Fig. 3, shown in isolation;
Fig. 4B is an elevation view of the embodiment of Fig. 4A;
Fig. 4C is a perspective view of the embodiment of Fig. 4A;
Fig. 5A is a perspective view of a portion of the embodiment of Fig. 1A shown in the disengaged position;
Fig. 5B is a plan view of the embodiment of Fig. 5A;
Fig. 5C is a plan view of a portion of the embodiment of Fig. 1B, shown in the engaged position;
Fig. 6A is a cross-sectional view of a splice joint assembly of Fig. 1B;
Fig. 6B is a perspective cross-sectional view of a splice joint assembly of Fig. 1B, shown having an embodiment of an insulating sheath on a shaft of the assembly; and
Fig. 6C is a cross-sectional view of the embodiment of Fig. 6B.

### DETAILED DESCRIPTION

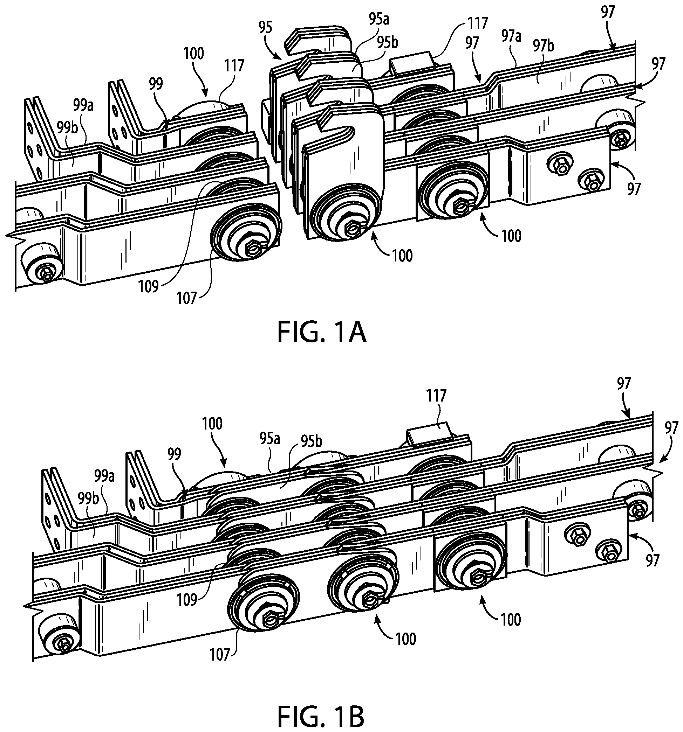

Reference will now be made to the drawings wherein like reference numerals identify similar structural features or aspects of the subject disclosure. For purposes of explanation and illustration, and not limitation, an illustrative view of an embodiment of an assembly in accordance with the disclosure is shown in Fig. 1A and is designated generally by reference character 100. Other views, embodiments, and/or aspects of this disclosure are illustrated in Figs. 1B-6C.

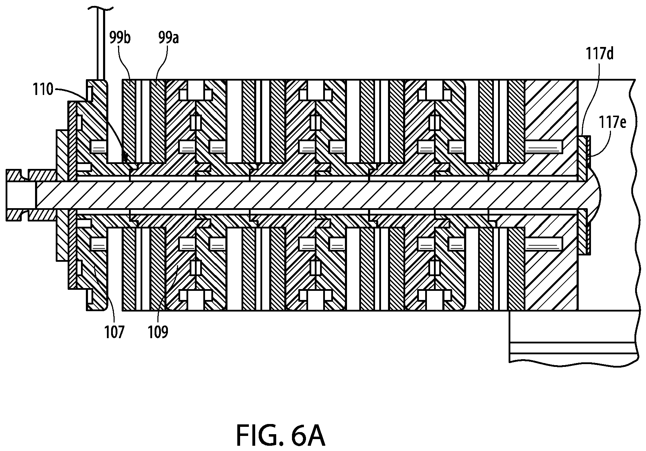

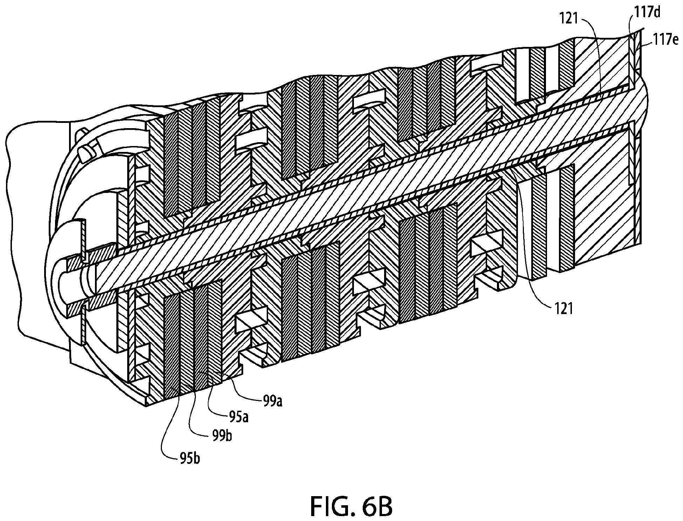

Referring to Figs. 1A-3, a splice joint assembly 100 can be configured to join bus bar structure ends (e.g., of a first section and a second section) to allow a splice connection at each bus bar structure 99, 97 (e.g., formed of two parallel conductors 99a, 99b, 97a, 97b) of a plurality of bus bar structures 99, 97. The assembly 100 can include a carriage bolt 101 configured to pass through an opening (e.g., as shown in Figs. 6A-6C) in the plurality of bus bar structures 99, 97 to fix a position of the plurality of bus bar structures 99, 97 relative to each other and to align the plurality of bus bar structures 99, 97. The carriage bolt 101 can be electrically insulated or made of an electrically insulating material, for example.

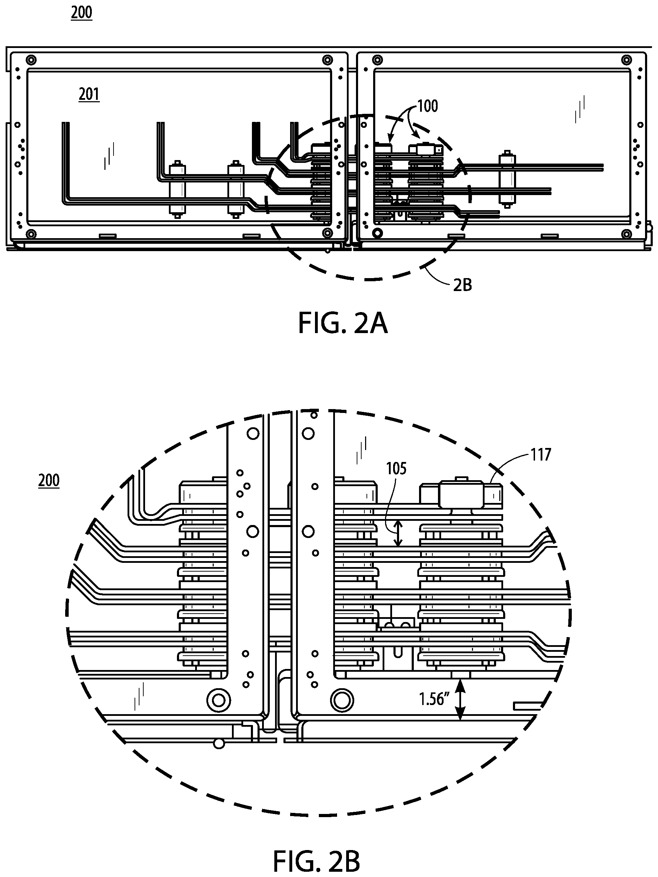

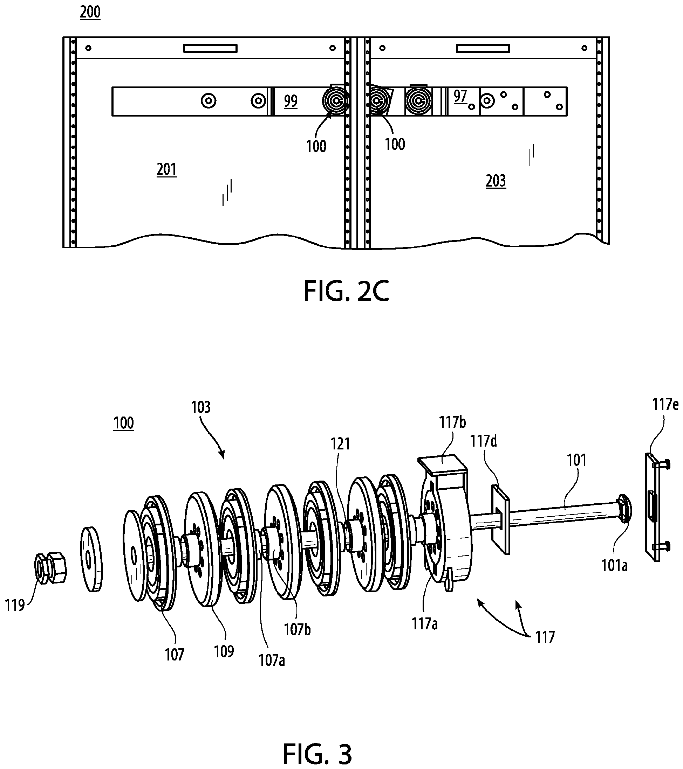

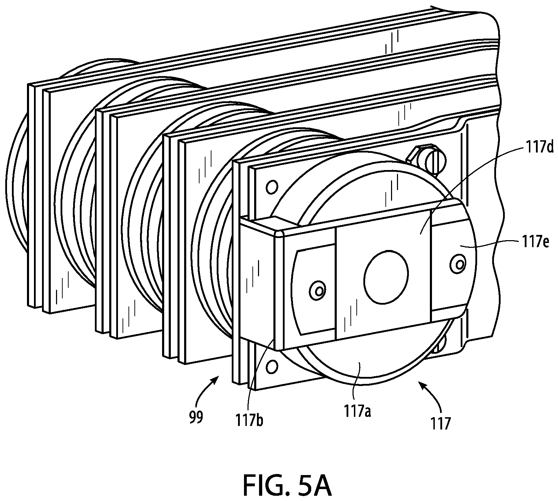

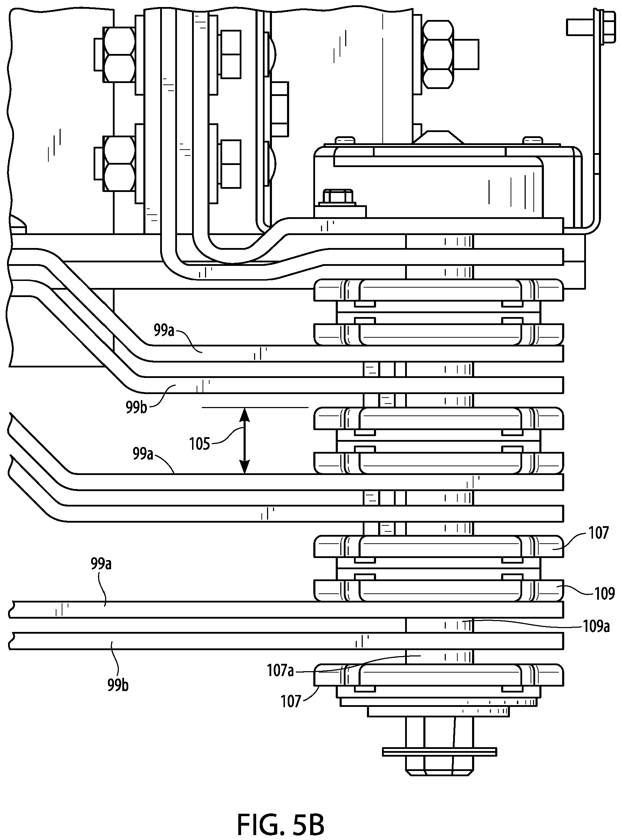

The splice joint assembly 100 can include a spacer structure 103 disposed between each bus bar structure 99, 97 and around the carriage bolt 101. The spacer structure 103 can be configured to electrically isolate each bus bar structure 99, 97 from adjacent (in the axial direction of carriage bolt 101) bus bar structures 99, 97. The spacer structure 103 can define an axial gap distance 105 (e.g., as shown in Fig. 2C and Fig. 5b) between bus bar structures 99. The spacer structure 103 can define an elongated over-surface path (e.g., a tortuous path) to elongate an over-surface distance to maintain electrical isolation of adjacent bus bar structures 99, 97.

In certain embodiments, the splice joint assembly 100 can include one or more of the bus bar structures 99, 97. In certain embodiments, the bus bar structures 99 each include bus bar pairs 99a, 99b (e.g., of a first section bus) configured to receive complimentary bus bar pairs 97a, 97b of bus bar structures 97 (e.g., of a second section bus). Certain embodiments of the splice joint assembly 100 can include the complimentary bus bar pairs 97a, 97b. In certain embodiments, the complimentary bus bar pairs 97a, 97b can include a rotatable portion 95a, 95b configured to rotate into captive engagement with the bus bar structures 99 (e.g., by moving into contact with bus bar structures 99 and engaging the splice joint assembly 100, e.g., similar to a latch). For example, the rotatable portion 95a, 95b can be hook shaped.

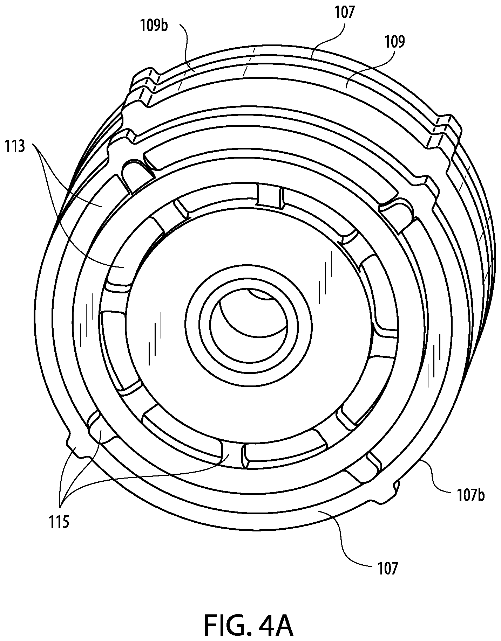

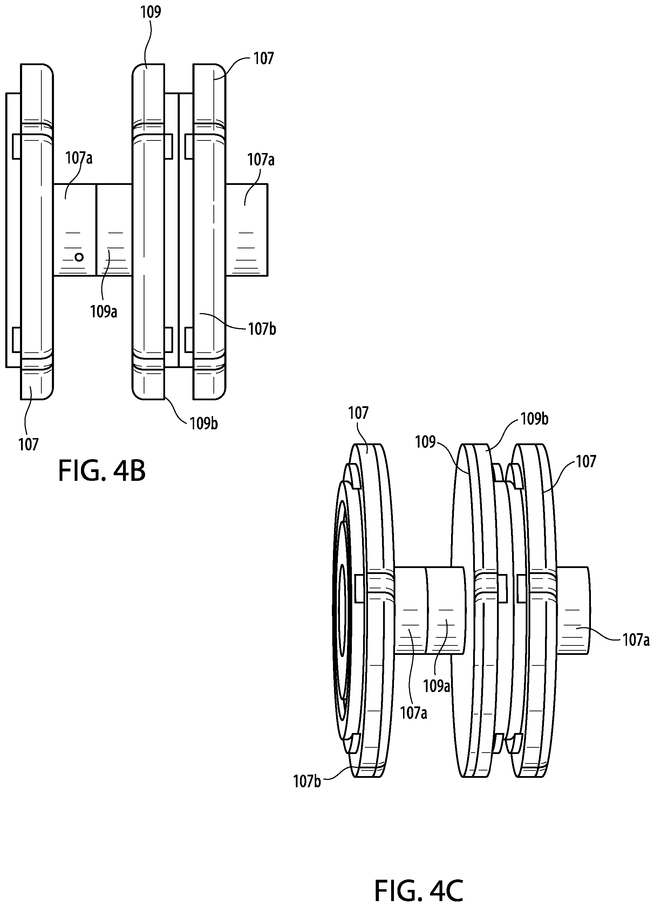

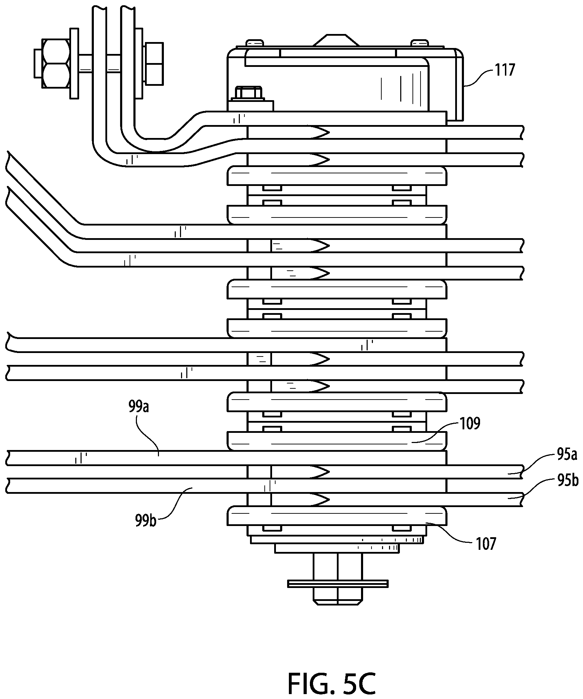

In certain embodiments, referring additionally to Figs. 4A-6C, the spacer structure 103 can include a plurality of flanged spacers 107, 109 configured to nest together to isolate the bus bar structures 99, 97. The flanged spacers 107, 109 can be insulator spacers for example (e.g., made of an electrically insulating material such as plastic, silicone, ceramic, etc.). In certain embodiments, the plurality of flanged spacers 107, 109 can include alternating first spacers 107 and second spacers 109. In certain embodiments, each of the first spacers 107 can include a first neck portion 107a extending over the carriage bolt 101 and having an outer dimension configured to fit within the opening 110 of the plurality of bus bar structures 99, 97 (e.g., a hole defined through the bus bar structured 99, 97 for receiving neck portions 107a, 109a and a carriage bolt 101 therein as shown in Figs. 5C-6C). The first spacers 107 can include a first flange portion 107b extending dimensionally outward relative to the first neck portion 107a. In certain embodiments, each of the second spacers 109 can include a second neck portion 109a extending over the carriage bolt 101 and having an outer dimension configured to fit within the opening 110 of the plurality of bus bar structures 99, 97. The second spacers 109 can include a second flange portion 109b extending dimensionally outward relative to the second neck portion 109a.

As shown, e.g., in Figs. 6A-6C, the second neck portion 109a can be configured to nest with the first neck portion 107a. For example, the first neck portion 107a can include a neck recess configured to receive a neck extension of the second neck portion 109a. Any other suitable complimentary structures are contemplated herein. The second flange portion 109b can be configured to nest (or otherwise mate and/or abut, e.g., flushly) with the first flange portion 107a. The spacer 109 can include an extension extending along the length of the carriage bolt 101 that inserts into a recess in the first spacer 107. For example, the second spacer 109 can include an extension extending along the length of the carriage bolt 101 that inserts into a recess in the first spacer 107. The reverse arrangement, or any other suitable abutment, is contemplated herein.

In certain embodiments, the first flange portion 107b and the second flange portion 109b can define one or more channels 113 (e.g., as shown in Fig. 4A) configured to increase surface area and/or an over-surface distance between bus bar structures 99, 97. As shown in Fig. 4A, the flange portion 107b can define one or more structures 115 (e.g., posts, standoffs, and/or partial projections) extending axially and/or radially therefrom to increase over-surface distance, for example. In certain embodiments, the alternating first spacers 107 and second spacers 109 form a continuous cover over the carriage bolt 101 (e.g., such that neck portions 107a, 109a provide insulation and/or additional insulation to the carriage bolt 101). In certain embodiments, the alternating first spacers 107 and second spacers 109 form an interface for one or more complimentary captive bus bar hook structures (e.g., of rotatable portions 95a, 95b such that the neck portions 107a, 109a are inserted into the hook structure when rotated into engagement).

In certain embodiments, the splice joint assembly 100 can include an anti-rotation retainer assembly 117 configured to retain the carriage bolt 101 in a rotational position relative to the bus bar structures 99, 97. The splice joint assembly 100 can include a nut 119 (e.g., a torque nut configured to break at a predetermined torque) configured to thread to the carriage bolt 101 to axially retain the carriage bolt 101, the bus bar structures 99, 97, and the spacer assembly 103. In certain embodiments, the anti-rotation retainer 117 can include a housing structure 117a configured to engage with an end bus bar structure of the plurality of bus bar structures 99, 97 to prevent rotation of the housing structure 117a. In certain embodiments, the housing structure 117a can be configured to receive a flat 101a of the carriage bolt 101 to rotationally lock the carriage bolt 101 to the housing structure 117a. In certain embodiments, the housing structure 117a can include a lip 117b configured to contact the end bus bar structure 99, 97 and to engage the end bus bar structure 99, 97 with the lip.

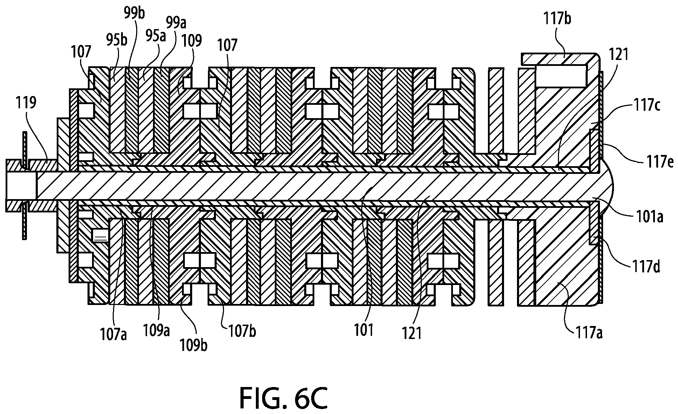

In certain embodiments, the housing structure 117a can include a plate detent 117c (e.g., square shaped or other suitable shape) defined by one or more walls extending axially (e.g., to form a recess as shown in Fig. 6C). In certain embodiments, the housing structure 117a can include a plate 117d (e.g., having a complementary shape to the detent 117c) configured to insert into the plate detent 117c such that the plate 117d cannot rotate relative to the housing structure 117a. The plate 117d can include a carriage bolt hole shaped to interface with the flat 101a on the carriage bolt to prevent the carriage bolt 101 from rotating relative to the plate 117d. The anti-rotation retainer 117 can include a captive member 117e configured to trap the carriage bolt 101 and plate 117d to the housing structure 117a. The captive member 117e can be fastened to the housing structure 117a.

In certain embodiments, the anti-rotation retainer 117 can be fastened (e.g., via a screw through an extension) to the respective bus bar structure 99, 97 to further prevent movement relative to the bus bar structure 99, 97). In certain embodiments, the carriage bolt 101 can be metallic and include an insulating sheath 121 disposed thereon. The insulating sheath can be a thermal plastic insulating sheath (e.g., Glastic). The carriage bolt can be made of any other suitable material (e.g., a suitably strong non-conductive material).

In accordance with at least one aspect of this disclosure, a bus bar splice assembly (e.g., as shown in Figs. 1A and 1B) can include a first plurality of bus bar structures 99 of a first section joined together at a first joint (e.g., at a first assembly 100) while being electrically isolated from each other, a second plurality of bus bar structures 97 of a second section joined together at a second joint (e.g., a second assembly 100) while being electrically isolated from each other, and a rotating captive engagement assembly 95 (e.g., including rotatable members 95a, 95b) rotatably and electrically connected to the second plurality of bus bar structures 97 at a rotation joint (e.g., a third assembly 100) and configured to engage the first plurality of bus bar structures 99 at the first joint in an engaged position to electrically connect the first plurality of bus bar structures 99 to the second plurality of bus bar structures 97 to splice the first section and the second section. At least one of the first joint, the second joint, or the rotation joint can be a splice joint assembly 100 as disclosed herein. In certain embodiments, the captive engagement assembly 95 can include a hook shape.

In accordance with at least one aspect of this disclosure, an electrical assembly 200, e.g., as shown in Figs. 2A-2C, can include a first section 201 (e.g., having a first plurality of bus bar structures 99), a second section 203 (having a second plurality of bus bar structures 97), and at least one splice joint assembly, e.g., assembly 100 as disclosed herein, disposed between the first section 201 and the second section 203 to splice the first section 201 and the second section 203 together in electrical communication. The assembly 200 can include any other suitable components and/or structures, and any suitable number of splice joint assemblies 100 (e.g., three as shown, one used as a rotatable joint).

Systems having multiple phases are required to be separated according to electric code rules to avoid arcing/leakage. Embodiments provide an assembly that can use a single carriage bolt to secure multiple phases together while also separating the phases suitably (e.g., per code) to prevent arcing and providing a splice interface. Certain embodiments can include three carriage bolts forming joints having a series of insulator spacers used to achieve section splice. A user can achieve a splice with a single tool and all components can be captive to the assembly (e.g., using the captive carriage bolt, anti-rotation assembly, sandwiched spacers, and a torque nut). Embodiments can provide captive hardware and easy front access installation.

Certain embodiments can include a front accessible three carriage bolt easy install captive section splice. Certain embodiments can include any other suitable number (e.g., one, two, etc.) of splice assemblies in the system. Certain embodiments can include captive splice bus bars with a hook feature which can be secured and shipped in a disengaged position (e.g., a vertical position, e.g., as shown in Fig. 1A) for a user to loosen, rotate into engagement, and tighten. In certain embodiments, once the two section frames are bolted together, in the field, the user can loosen nuts on each of the three carriage bolts, the user can rotate captive hook bus bars in the second section to create the splice joint with the first section bus. For example, as shown in Fig. 1B, the user can rotate all captive bus bars 90 degrees until hooks are fully seated on the first section around the insulator spacers. In certain embodiments, the user can then re-torque all three torque nuts fully until the front segment of nut drops off (e.g., which can avoid the need to measure torque applied to the nut as a torque nut assembly can be designed to separate at proper joint torque).

Certain embodiments can have a front access to the splice connection reduced to a small distance (e.g., about 1.56 inches in some structures) and unobstructed from the front of the sections. Certain embodiments can allow a single tool (e.g., a wrench or socket) for connection. Certain embodiments can include a carriage bolt in conjunction with an anti-rotation feature used to avoid requiring access to the back of joint hardware.

Certain embodiments can include flanged insulator spacers shaped to nest together and provide at least a minimum required gap distance and surface coverage required by rule (e.g., NEC rule). As an example, the distance between bus bars structures (e.g., phases of the system) can be about one inch through air at certain voltages, and over-surface distance can be two inches due to the geometry of the spacers.

Certain embodiments of spacers can include one side that has a neck that goes through bus bar structures (e.g., through the opening), and the other side defining a nesting annular structure. Certain embodiments of spacers can be self-aligning for the rotating arms to engage with. In certain embodiments, the spacers can be fixed along the carriage bolt axis by virtue of compression with other spacers, bus bar structures, and the carriage bolt, and only a middle an inner ring portion of the spacers (e.g., annular protrusions and/or recesses) can take the compression load. Certain embodiments can include grooves and bump-outs for increasing over surface distance, e.g., relative to a simple disc or plate shape) to control the over surface path/distance to comply with over surface distance regulation. In certain embodiments, the spacers can be configured such that they can rotate relative to each other and need not be rotationally aligned, while the over surface distance maintains at least the minimum at any relative rotational position (e.g., two inches).

Certain embodiments can include a captive plate (e.g., made of any suitable material, e.g., metal or plastic) that traps the carriage bolt and anti-rotation plate axially to the anti-rotation assembly. Certain embodiments can include a hole in the captive plate that is smaller than the head of the carriage bolt. A hole in the captive plate is not necessary and could be a flat plate or any other captive shape. Certain embodiments can include a square hole in an anti-rotation plate to receive a square flat portion of the carriage bolt. An anti-rotation housing structure (e.g., made of an insulating material such as plastic, ceramic, silicone, or other suitable material) can have surfaces to prevent rotation of the anti-rotation washer. Certain embodiments can include a lip that fits on the side of the bus bar structure to prevent rotation of the anti-rotation assembly. Certain embodiments can include a screw attachment fixing the housing structure to bus bar which can also prevents rotation. This screw attachment can keep the entire assembly from falling apart if the nut is not on the carriage bolt, for example. Also, by holding the housing 117 fixed, it can also ensure that the lip maintains contact with the bus bar structure edge to prevent rotation during the tightening action.

Certain embodiments can include captive splice bus bars from adjacent sections which can be front accessible and have an easy install captive section splice. Certain embodiments can be used to improve low voltage switchboards, power products, busways, envelop and enclosures, installation, connection, power distribution, and function. Certain embodiments can require significantly less bolts (e.g., three instead of eight in certain traditional splice systems) and much more convenient access to save installation time and increase safety. Certain embodiments can eliminate the need to reach deep into sections and prevent dropping non captive hardware.

Insulator spacers between phases in the bus joint can allow all phases (e.g., A, B, C and neutral) to be joined with a single carriage bolt construction. The carriage bolt can be captive and the a rear insulating structure can provide an anti-rotation feature, so a user only needs to utilize a wrench or socket from the front to torque the joint unobstructed without reaching deep within the section. The insulator spacers separating the phases can also provide the over surface distance required to bundle all phases together.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A splice joint assembly for joining bus bar structure ends to allow a splice connection at each bus bar structure of a plurality of bus bar structures, wherein the joint assembly includes:
a carriage bolt configured to pass through an opening in the plurality of bus bar structures to fix a position of the plurality of bus bar structures relative to each other and to align the plurality of bus bar structures, wherein the carriage bolt is electrically insulated or made of an electrically insulating material; and
a spacer structure disposed between each bus bar structure and around the carriage bolt, the spacer structure configured to electrically isolate each bus bar structure from adjacent bus bar structures, wherein the spacer structure defines an axial gap distance between bus bar structures, wherein the spacer structure defines an elongated over-surface path to elongate an over-surface distance to maintain electrical isolation of adjacent bus bar structures.

2. The splice joint assembly of claim 1, further comprising the bus bar structures, wherein the bus bar structures each include bus bar pairs configured to receive complimentary bus bar pairs.

3. The splice joint assembly of claim 2, further comprising the complimentary bus bar pairs, wherein the complimentary bus bar pairs include a rotatable portion configured to rotate into captive engagement with the bus bar structures.

4. The splice joint assembly of claim 1, wherein the spacer structure includes a plurality of flange spacers configured to nest together to isolate the bus bar structures.

5. The splice joint assembly of claim 4, wherein the plurality of flanged spacers includes alternating first spacers and second spacers.

6. The splice joint assembly of claim 5, wherein each of the first spacers include:
a first neck portion extending over the carriage bolt and having an outer dimension configured to fit within the opening of the plurality of bus bar structures; and
a first flange portion extending dimensionally outward relative to the first neck portion.

7. The splice joint assembly of claim 6, wherein each of the second spacers include:
a second neck portion extending over the carriage bolt and having an outer dimension configured to fit within the opening of the plurality of bus bar structures, wherein the second neck portion is configured to nest with the first neck portion; and
a second flange portion extending dimensionally outward relative to the second neck portion, the second flange portion configured to nest with the first flange portion.

8. The splice joint assembly of claim 7, wherein the first flange portion and the second flange portion define one or more channels configured to increase surface area and/or an over-surface distance between bus bar structures.

9. The splice joint assembly of claim 8, wherein the alternating first spacers and second spacers form a continuous cover over the carriage bolt and an interface for one or more complimentary captive bus bar hook structures.

10. The splice joint assembly of claim 1, comprising an anti-rotation retainer assembly configured to retain the carriage bolt in a rotational position relative to the bus bar structures, and a nut configured to thread to the carriage bolt to axially retain the carriage bolt, the bus bar structures, and the spacer assembly.

11. The splice joint assembly of claim 10, wherein the anti-rotation retainer includes a housing structure configured to engage with an end bus bar structure of the plurality of bus bar structures to prevent rotation of the housing structure, wherein the housing structure is configured to receive a flat of the carriage bolt to rotationally lock the carriage bolt to the housing structure.

12. The splice joint assembly of claim 11, wherein the housing structure includes a lip configured to contact the end bus bar structure and to engage the end bus bar structure with the lip.

13. The splice joint assembly of claim 12, wherein the housing structure includes a plate detent defined by one or more walls extending axially.

14. The splice joint assembly of claims 13, wherein the housing structure includes a plate configured to insert into the plate detent such that the plate cannot rotate relative to the housing structure, the plate comprising a carriage bolt hole shaped to interface with the flat on the carriage bolt to prevent the carriage bolt from rotating relative to the plate.

15. The splice joint assembly of claim 14, wherein the anti-rotation retainer includes a captive member configured to trap the carriage bolt and plate to the housing structure.

16. The splice joint assembly of claim 15, wherein the captive member is fastened to the housing structure.

17. The splice joint assembly of claim 1, wherein the carriage bolt is metallic and includes an insulating sheath disposed thereon.

18. A bus bar splice assembly, comprising:
a first plurality of bus bar structures of a first section joined together at a first joint while being electrically isolated from each other;
a second plurality of bus bar structures of a second section joined together at a second joint while being electrically isolated from each other; and
a rotating captive engagement assembly rotatably and electrically connected to the second plurality of bus bar structures at a rotation joint and configured to engage the first plurality of bus bar structures at the first joint in an engaged position to electrically connect the first plurality of bus bar structures to the second plurality of bus bar structures to splice the first section and the second section, wherein at least one of the first joint, the second joint, or the rotation joint are a splice joint assembly of claim 1.

19. The bus bar splice assembly of claim 18, wherein the captive engagement assembly includes a hook shape.

20. An electrical assembly, comprising:
a first section;
a second section; and
at least one splice joint assembly of claim 1 disposed between the first section and the second section to splice the first section and the second section together in electrical communication.
